# EUROPÄISCHE PATENTSCHRIFT

(11) **EP 0 659 651 B1**
(45) Veröffentlichungstag und Bekanntmachung des Hinweises auf die Patenterteilung: **04.03.1998**
(21) Anmeldenummer: 94117380.9
(22) Anmeldetag: 03.11.1994
(51) Int. Cl.: B65D 19/12

(54) **Vorrichtung zum Halten einer Sammelverpackung, Verwendung der Vorrichtung und Verpackungssystem**
Device of holding a collecting package, use of the device and packaging system
Dispositif pour maintenir un emballage collecteur, utilisation du dispositif et système d'emballage

(30) Priorität: 22.12.1993 DE 4343960
(43) Veröffentlichungstag der Anmeldung: 28.06.1995
(73) Patentinhaber: RHONE-POULENC RHODIA AKTIENGESELLSCHAFT, 79108 Freiburg (DE)
(72) Erfinder: Greiner, Christoph, D-79279 Vörstetten (DE); Kern, Dietmar, D-79350 Sexau (DE); Perner, Matthias, D-79106 Freiburg (DE)
(74) Vertreter: Hagemann, Heinrich, Dr.rer.nat., Dipl.-Chem.

(56) Entgegenhaltungen:
- EP-A- 0 373 506
- US-A- 5 155 975

## Beschreibung

Die vorliegende Erfindung betrifft eine Vorrichtung zum Halten einer Sammelverpackung geringer Steifigkeit zum Sammeln und Verpacken wiederverwendbarer Verpackungen für Filter-Tow, wobei die Vorrichtung mehrere aufstellbare Seitenteile aufweist, die aufgestellt außerhalb der Sammelverpackung einen Raum zur Unterbringung der Sammelverpackung begrenzen und die Sammelverpackung umfangen, die Verwendung dieser Vorrichtung, ein Verfahren zum Sammeln und Verpacken von wiederverwendbaren Verpackungen für Filter-Tow und ein entsprechendes Verpackungssystem.

Zur Herstellung von Filtern für z.B. Filterzigaretten wird sogenanntes Filter-Tow verwendet, das in entsprechenden Verpackungen ballenförmig abgepackt angeliefert wird. Als Verpackung kann eine wiederverwendbare Verpackung eingesetzt werden, die zum Hersteller des Filter-Tows zur Wiederverwendung rückgeführt wird. Solche Verpackungen können aus Materialien geringer Steifigkeit bestehen, wie aus einem Kunststoffgewebe, insbesondere aus einem Polypropylen-, Polyethylen- und Polyestergewebe, oder aus Papier oder einer Kunststoff-Folie, so daß die Verpackung ohne Inhalt in sich zusammenfallen kann und instabil ist.

Die Wiederverwendbarkeit solcher Verpackungen ist jedoch nur gewahrleistet, wenn mit den Verpackungen nach Entfernen ihres Inhalts auch sachgemäß umgegangen wird, d.h. insbesondere, daß die wiederverwendbaren Verpackungen in geeigneter Art und Weise gesammelt, aufbewahrt und zum Hersteller des Filter-Tows rückgeführt werden.

Eine Vorrichtung zum Halten einer Sammelverpackung geht aus der EP-A-373 506 hervor. Bei dieser bekannten Vorrichtung handelt es sich um einen Schiffscontainer, der aus einer Anzahl vertikaler Pfosten besteht, welche durch Querstreben miteinander verbunden sind. An den Pfosten oder an den Querstreben sind Mittel zum Halten einer Sammelverpackung geringer Steifigkeit vorgesehen. In einer bevorzugten Ausführungsform ist die Rahmenkonstruktion so ausgelegt, daß sie als ganzes zusammengefaltet werden kann, wobei nach dem Zusammenfalten mindestens jeweils zwei Seiten nebeneinander zu liegen kommen. Diese bekannte Vorrichtung weist also auch in zusammengefaltetem Zustand eine relativ große Fläche auf, wodurch sie sich beim Transport als sperrig erweist.

Eine weitere Vorrichtung zum Halten einer Sammelverpackung geringer Steifigkeit ist aus der US-A-5 155 975 bekannt. Diese besteht aus einer massiven Kiste mit vier Seitenwänden und einer Bodenwand. Eine der Seitenwände kann seitlich nach außen aufgeklappt werden, so daß der Sammelbehälter auf einfache Weise in die Kiste eingeführt bzw. aus ihr entfernt werden kann. Diese Ausführungsform hat den Nachteil, daß sie, da sie nicht abgebaut werden kann, auch dann einen beträchtlichen Platz einnimmt, wenn sie nicht in Gebrauch ist.

Aufgabe der vorliegenden Erfindung ist es deshalb, eine leicht zu errichtende und leicht abzubauende Vorrichtung zum Halten einer Sammelverpackung anzugeben, die möglichst platzsparend verstaut werden kann, wenn sie sich nicht in Gebrauch befindet.

Diese Aufgabe wird gelöst durch eine Vorrichtung zum Halten einer Sammelverpackung geringer Steifigkeit zum Sammeln und Verpacken wiederverwendbarer Verpackungen für Filter-Tow, wobei die Vorrichtung mehrere aufstellbare Seitenteile, die aufgestellt außerhalb der Sammelverpackung einen Raum zur Unterbringung der Sammelverpackung begrenzen und die Sammelverpackung umfangen, und eine Halteeinrichtung, die mit den Seitenteilen verbunden ist, zum Befestigen der Sammelverpackung an den aufgestellten Seitenteilen aufweist, die dadurch gekennzeichnet ist, daß mindestens eines der Seitenteile derart nach außen, von der Sammelpackung weg, klappbar ist, daß die Sammelverpackung der Vorrichtung seitlich bzw. stirnseitig entnehmbar ist, wobei die Seitenteile auf eine Seitenteilegruppe oder mehrere voneinander getrennte Seitenteilegruppen aufgeteilt sind, zwischen denen eine lösbare Verbindung vorgesehen ist, wobei die Seitenteile in jeder der Seitenteilegruppen miteinander derart gelenkig verbunden sind, daß sie aufeinander zu umgeklappt werden können, wobei nach dem Umklappen die Flächen der Seitenteile parallel zueinander liegen, so daß die zusammengeklappte Vorrichtung nicht länger ist als das längste der Seitenteile.

Ferner wird die Aufgabe durch eine Vorrichtung zum Halten einer Sammelverpackung obiger Art gelöst, wobei diese Vorrichtung mehrere aufstellbare Seitenteile, die aufgestellt außerhalb der Sammelverpackung einen Raum zur Unterbringung der Sammelverpackung begrenzen und die Sammelverpackung umfangen oder aufgestellt innerhalb der Sammelverpackung derart angeordnet sind, daß sie den größtmöglichen Raum innerhalb der Sammelverpackung begrenzen und von der Sammelverpackung umfangen werden, und eine Halteeinrichtung, die mit den Seitenteilen verbunden ist, zum Befestigen der Sammelverpackung an den aufgestellten Seitenteilen aufweist, wobei die Seitenteile auf eine Seitenteilegruppe oder mehrere voneinander getrennte Seitenteilegruppen aufgeteilt sind, zwischen denen eine lösbare Verbindung vorgesehen ist, wobei die Seitenteile in jeder der Seitenteilegruppen miteinander derartig gelenkig verbunden sind, daß sie aufeinander zu umgeklappt werden können, wobei nach dem Umklappen die Flächen der Seitenteile parallel zueinander liegen, so daß die zusammengeklappte Vorrichtung nicht länger ist als das längste der Seitenteile.

Weiterhin wird die Aufgabe durch eine Vorrichtung zum Halten einer Sammelverpackung obiger Art gelöst, wobei die Vorrichtung (10) mehrere aufstellbare Seitenteile (1-6), die aufgestellt außerhalb der Sammelverpackung (20) einen Raum zur Unterbringung der Sammelverpackung begrenzen und die Sammelverpackung umfangen, und eine Halteeinrichtung (30), die mit den Seitenteilen (1 bis 6) verbunden ist, zum Befestigen der Sammelverpackung (20) an den aufgestellten Seitenteilen (1 bis 6) aufweist, wobei
die Vorrichtung zwei im wesentlichen gleiche Seitenteilegruppen (A, B) aufweist, jede der Seitenteilegruppen (A, B) aus drei Seitenteilen (1, 2, 6; 3, 4, 5) aufgebaut ist, die Seitenteile (1, 2, 6; 3, 4, 5) einer Seitenteilegruppe (A, B) miteinander gelenkig derart verbunden sind, daß zwei der Seitenteile (2, 6; 3, 5) zum dritten Seitenteil (1; 4) hin umgeklappt werden können und nach dem Umklappen in einer Fläche parallel zu und angrenzend an dem verbundenen dritten Seitenteil (1; 4) liegen, und daß zwei der Seitenteile (2, 3; 5, 6) derart umgeklappt werden können, daß die Sammelverpackung (20) der Vorrichtung (10) seitlich bzw. stirnseitig entnommen werden kann.

Die oben bezeichnete Sammelverpackung weist ein Bodenteil, ein Mittelteil und ein Oberteil auf, wobei das Bodenteil mit dem Mittelteil fest oder lösbar verbunden ist und das Oberteil auf das Mittelteil aufgesetzt werden kann, um die Sammelverpackung zu schließen, wobei das Mittelteil eine Befestigungseinrichtung aufweist, mit der die Sammelverpackung an der Vorrichtung gemäß der vorliegenden Erfindung befestigbar ist. Dabei kann die Befestigungseinrichtung so ausgebildet sein, daß sie auch als Verbindungsanordnung zum Verbinden des Oberteils mit dem Mittelteil dienen kann.

Ganz allgemein liegt der vorliegenden Erfindung der Gedanke zugrunde, leere bzw. nicht mehr benötigte Verpackungen für Filter-Tow in einer dafür ausgelegten Vorrichtung zu sammeln, aufzubewahren und rückzuführen. Diese Sammel-, Aufbewahrungs- und Rückführungsmöglichkeit für wiederverwertbare Verpackungen für Filter-Tow wird im allgemeinen dort eingesetzt, wo die leeren Verpackungen anfallen, nämlich z.B. beim Zigarettenhersteller, wenn also der Inhalt der Verpackungen Filter-Tow ist.

Die erfindungsgemäße Vorrichtung weist mehrere aufstellbare Seitenteile bzw. Wandteile auf, die im aufgestellten Zustand entweder außerhalb einer Sammelverpackung einen Raum zur Unterbringung der Sammelverpackung begrenzen und die Sammelverpackung umfangen oder innerhalb der Sammelverpackung derart angeordnet sind, daß sie den größtmöglichen Rauminhalt der Sammelverpackung begrenzen und von der Sammelverpackung umfangen werden, so daß andere leere Verpackungen in der Sammelverpackung gesammelt, aufbewahrt und rückgeführt werden können. Die erfindungsgemäße Vorrichtung weist weiterhin eine Halteeinrichtung auf, die an den Seitenteilen angebracht ist und dazu dient, die Sammelverpackung an den aufgestellten Seitenteilen zu befestigen, damit die Sammelverpackung nicht zusammenfallen kann. Die Seitenteile innerhalb einer Seitenteilegruppe der Vorrichtung oder des Gestells sind derart miteinander gelenkig verbunden, daß sie aufeinander zu umgeklappt werden können, wobei nach dem Umklappen die Flächen der Seitenteile parallel zueinander liegen. Wenn die Vorrichtung nicht benutzt oder transportiert wird, können die ansonsten relativ sperrigen Seitenteile im zusammengeklappten Zustand aufbewahrt bzw. transportiert werden. Die Seitenteile gemäß der vorliegenden Erfindung können nach Art einer Rähmenkonstruktion ausgelegt sein, also aus einem entsprechenden Gestänge bestehen. Die Seitenteile bzw. die entsprechenden Rahmen können mit benachbarten Seitenteilen bzw. Rahmen gelenkig verbunden sein, um klappbare Seitenteilegruppen bzw. Rahmengruppen zu bilden.

Die Gelenkverbindungen können Scharniere sein, die auf der Innen- oder Außenseite der Rahmenkonstruktion bzw. der Seitenteile angeordnet und befestigt sein können. Die Scharniere können schließlich noch lösbar oder teilbar sein.

Das Material, aus dem die Vorrichtung (Rahmenkonstruktion) besteht, kann beispielsweise Metall, Kunststoff oder Holz sein. Vorzugsweise besteht die Vorrichtung aus einem leichten Material, wie z.B. Aluminium, dünnwandiges Stahlrohr und Kunststoff. Die Rahmenkonstruktion kann aus einem Gestänge nach dem Prinzip von "Zeltstangen" (mit Kordeln oder Federn oder ähnlich verbundenen Einzelstangen) aufgebaut sein.

Die Seitenteile sind entsprechend der Form und den Abmessungen der Sammelverpackung ausgelegt. Demzufolge werden bei einer quaderförmigen Sammelverpackung dazu passende rechtwinklige Seitenteile bzw. entsprechende Rahmen bevorzugt verwendet.

Die Befestigung der Sammelverpackung an der Vorrichtung kann z.B. als Klettverbindung oder als Klammerverbindung ausgelegt sein oder auch durch einfaches Umschlagen der oberen Kante des Mittelteils der Sammelverpackung über die Oberkante der Vorrichtung erfolgen. Es kommen aber auch andere lösbare Verbindungsarten in Frage, wie z.B. Druckknopfverbindungen und ähnliches. Bei Verwendung einer Klettverbindung sind entsprechende Abschnitte aus Klettmaterial als Halteeinrichtung bzw. als Befestigungseinrichtung vorzugsweise im Bereich der Oberkante der Vorrichtung bzw. auch im Bereich der Oberkante der Sammelverpackung vorgesehen, um eine einfache Montage der Sammelverpackung in der Vorrichtung und auch ein Aufhalten der Sammelverpackung zu gewährleisten. Die Klettstreifen können innenseitig oder außenseitig an der Vorrichtung angebracht sein. Vorzugsweise sind sie jedoch obenauf, also auf einer Oberkante der Vorrichtung angebracht.

Die Sammelverpackung weist ein Bodenteil, ein Mittelteil und ein abnehmbares Oberteil auf, wobei das Bodenteil mit dem Mittelteil fest oder lösbar verbunden ist und das Oberteil auf das Mittelteil aufgesetzt werden kann, um die Sammelverpackung zu verschließen. Das Mittelteil hat die Klettstreifen, mit denen die Sammelverpackung in der Vorrichtung befestigt werden kann. Vorzugsweise wird jedoch nur ein Klettstreifen verwendet, der sich im Bereich einer Oberkante des Mittelteils der Sammelverpackung außenseitig am Mittelteil um das gesamte Mittelteil herum erstreckt.

Die Sammelverpackung besteht vorzugsweise aus einem Kunststoffgewebe, insbesondere aus Polypropylen, Polyethylen oder Polyester. Die Sammelverpackung kann auch aus Papier oder aus Kunststoff-Folienmaterial bestehen.

Die erfindungsgemäße Vorrichtung wird zusammen mit der Sammelverpackung zum Sammeln und Aufnehmen von Verpackungen für Filter-Tow verwendet, die gleich oder unterschiedlich zu der Sammelverpackung sind.

Im Rahmen der Erfindung sind demzufolge nicht nur die zu sammelnden Verpackungen für Filter-Tow, sondern auch die Sammelverpackung selbst wiederverwendbar. Grundsätzlich kann diese auch zum Verpacken von Materialien dienen, die dem Filter-Tow ähnlich sind.

Das erfindungsgemäße Verfahren zum Sammeln und Verpacken von wiederverwendbaren Verpackungen für Filter-Tow weist die folgenden Schritte auf:
- eine Vorrichtung zum Halten einer Sammelverpackung wird aufgestellt;
- die Sammelverpackung wird in der Vorrichtung untergebracht oder die Vorrichtung wird in der Sammelverpackung untergebracht, und anschließend an der Vorrichtung befestigt, um die Sammelverpackung aufzuhalten, und
- die anfallenden, leeren Verpackungen werden in der Sammelverpackung gesammelt.

Die Sammelverpackung kann also in die Vorrichtung eingesetzt werden oder die Vorrichtung kann in die Sammelverpackung eingesetzt werden.

Eine besondere Ausgestaltung des erfindungsgemäßen Verfahrens besteht darin, daß die Vorrichtung um eine Palette herum oder auf einer Palette aufgebaut bzw. aufgestellt wird. Vorzugsweise wird die befüllte Sammelverpackung verschlossen.

Das erfindungsgemäße Verpackungssystem zum Sammeln und Verpacken wiederverwendbarer Verpackungen für Filter-Tow weist eine Vorrichtung und eine Sammelverpackung auf, wobei die Vorrichtung die Sammelverpackung hält.

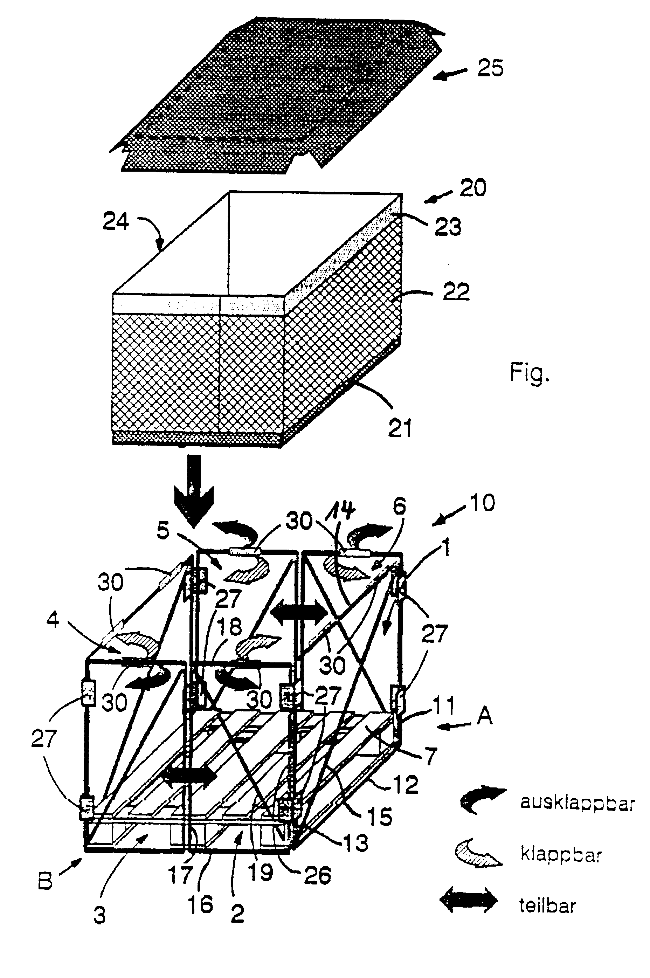

Weitere Vorteile und Eigenschaften der vorliegenden Erfindung sind aus der nachfolgenden detaillierten Beschreibung einer Ausführungsform der vorliegenden Erfindung in Verbindung mit der beiliegenden Zeichnung ersichtlich, die eine Ausführungsform der vorliegenden Erfindung mit einer um eine Palette herum aufgestellten Vorrichtung und mit unterzubringender Sammelverpackung teilweise schematisch zeigt.

Gemäß der Zeichnung umfaßt eine Ausführungsform der erfindungsgemäßen Vorrichtung 10 zwei Seitenteilegruppen A und B, die in der Zeichnung im aufgestellten und fertig montierten Zustand dargestellt sind. Die erste Seitenteilegruppe A weist die Seitenteile 1, 2 und 6 auf. Die kurzen Seitenteile 2 und 6 sind von der Fläche her, die sie einnehmen, jeweils etwa halb so groß wie das Seitenteil 1. Im dargestellten aufgestellten Zustand der Vorrichtung 10 sind die kurzen Seitenteile 2 und 6 rechtwinklig an dem langen Seitenteil 1 angeordnet. Die Seitenteile 2 und 6 sind mit dem langen Seitenteil 1 gelenkig verbunden, und können deshalb, wenn die Seitenteilegruppe A zusammengelegt werden soll, in Richtung des in der Zeichnung angegebenen Pfeils "klappbar" zusammengeklappt werden, und liegen dann auf dem langen Seitenteil im zusammengeklappten Zustand auf.

Die zweite Seitenteilegruppe B ist ähnlich zur ersten Seitenteilegruppe A aufgebaut und besteht aus einem langen Seitenteil 4, das identisch zum langen Seitenteil 1 der ersten Seitenteilegruppe A aufgebaut ist, und aus zwei kurzen Seitenteilen 3 und 5, die wie die Seitenteile 6 und 2 der ersten Seitenteilegruppe A aufgebaut sind. Auch bei der zweiten Seitenteilegruppe B sind die kurzen Seitenteile 3 und 5 bei aufgestellter Vorrichtung bzw. aufgestellter Seitenteilegruppe B rechtwinklig an dem langen Seitenteil 4 angeordnet und mit diesem gelenkig verbunden.

Ferner ist es möglich, daß zwei der Seitenteile 2,3 oder 5,6 umgeklappt bzw. ausgeklappt werden (vgl. Pfeile "ausklappbar") und damit die Vorrichtung 10 geöffnet wird, um die Sammelverpackung 20 der Vorrichtung 10 seitlich bzw. stirnseitig zu entnehmen.

Die Vorrichtung 10 bzw. ihre Seitenteilegruppen A und B sind nach der Art einer Rahmenkonstruktion mit entsprechendem Rahmengestänge aufgebaut. Das lange Seitenteil 1 weist zwei gleichlange Eckstangen 11 und 13 bzw. Stäbe, eine Bodenstange 12 und eine Oberkantstange 14 auf, die starr miteinander verbunden sind, wobei sich die Bodenstange 12 bei aufgestellter Vorrichtung 10 auf dem Boden bzw. Untergrund befindet, wo die Vorrichtung 10 steht. Die beiden Eckstangen 11 und 13, die Bodenstange 12 und die Oberkantstange 14 bilden zusammen einen rechtwinkligen Rahmen. Zur Stabilisierung des so gebildeten Rahmens des Seitenteils 1 ist eine Diagonalstrebe 15 in der Rahmenkonstruktion des Seitenteils 1 starr eingebaut. Das kurze Seitenteil 2 weist eine kurze Oberkantstange 18, eine kurze Bodenstange 16, die genauso lang wie die kurze Oberkantstange 18 ist, und eine Stange 17 sowie eine Stange 26 auf, die etwa die Länge der Eckstange 13 des Seitenteils 1 haben. Die Stange 26 ist mit entsprechenden Gelenken 27, die als außenseitig angeordnete Scharniere ausgelegt sind, mit der Eckstange 13 des Seitenteils 1 verbunden. Die Oberkantstange 18, die Stange 17, die kurze Bodenstange 16 und die Stange 26 bilden zusammen einen rechtwinkligen Rahmen. Dieser Rahmen wird durch eine Verstrebungsstange 19 stabilisiert.

Das zweite kurze Seitenteil 6 der Seitenteilegruppe A ist ähnlich zu dem Seitenteil 2 aufgebaut und braucht deshalb hier nicht weiter beschrieben zu werden. Die zweite Seitenteilegruppe B, bestehend aus den Seitenteilen 3, 4 und 5, ist im wesentlichen identisch zur ersten Seitenteilegruppe A aufgebaut. Insbesondere entsprechen sich die Seitenteile 1 und 4 bzw. die kurzen Seitenteile 3 und 2 bzw. 5 und 6. Eine genauere Beschreibung des Aufbaus der Seitenteile 3 bis 5 der zweiten Seitenteilegruppe B braucht deshalb hier nicht weiter durchgeführt werden.

Die Verstrebungsstangen 19 der kurzen Seitenteile 2 und 3 bzw. 5 und 6 sind derart in die entsprechenden Seitenteile eingebaut, daß sie sich bei aneinanderstoßenden Seitenteilen 2 und 3 bzw. 5 und 6 an den Oberkantstangen der kurzen Seitenteile 2 und 3 bzw. 5 und 6 in einem spitzen Winkel treffen. An den Stellen, wo die Stangen 17 der kurzen Seitenteile 2 und 3 bzw. 5 und 6 aneinanderstoßen, wenn die Vorrichtung sachgerecht aufgestellt ist, ist eine lösbare Verbindung vorgesehen, die die entsprechenden Seitenteile 2 und 3 bzw. 5 und 6 miteinander lösbar bzw. leicht teilbar (vgl. Pfeil "teilbar") verbindet. Diese Verbindung (nicht gezeigt) kann z.B. in der Form einer Haken/Öse-Verbindung, einer Schraubverbindung oder ähnlichem aufgebaut sein. Diese Verbindungen sollen eine mühelose Teilbarkeit bzw. Trennung der beiden Seitenteilegruppen A und B voneinander ermöglichen, um eine einfache Montage bzw. Demontage der Vorrichtung 10 vornehmen zu können.

An den Oberkantstangen 14 und 18 der Seitenteile 1, 2, 3, 4, 5 und 6 sind handelsübliche Klettstreifen 30 als Halteeinrichtung angebracht.

In der beiliegenden Zeichnung ist nach Art einer Explosionszeichnung über der Vorrichtung 10 eine Sammelverpackung 20 dargestellt, die aus einem durchgehenden Bodenteil 21, einem Mittelteil 22 (Manschettenteil), das mit dem Bodenteil 21 fest oder lösbar verbunden ist, und einem Oberteil 25 besteht, das auf die Oberkante des Mittelteils 22 aufgesetzt werden kann, um die Sammelverpackung 20 zu verschließen. Im Bereich der Oberkante 24 des Mittelteils 22 ist umlaufend außenseitig an der Sammelverpackung 20 ein handelsüblicher Klettstreifen 23 als Befestigungsmittel angebracht. Bei der Sammelverpackung 20 handelt es sich um eine wiederverwendbare Verpackung, wie sie z.B. zum Verpacken von Filter-Tow verwendet werden kann. Die Sammelverpackung 20 besteht im wesentlichen aus Kunststoffgewebe, dessen Steifigkeit relativ gering ist, so daß die Sammelverpackung 20 ohne entsprechende Stützung und Halterung durch die Vorrichtung 10 in sich zusammenfallen würde.

Zum Sammeln und Aufbewahren von wiederverwendbaren leeren Verpackungen für Filter-Tow, die der Sammelverpackung 20 entsprechen, wird die Vorrichtung 10 folgendermaßen aufgebaut, wobei davon ausgegangen wird, daß die Seitenteilegruppen A und B jeweils zusammengelegt bzw. zusammengeklappt sind.

Die Seitenteilegruppe A wird aufgestellt und die kurzen Seitenteile 2 und 6 werden ausgeklappt. Die Seitenteilegruppe A wird dann um eine vorher bereitgestellte (Holz-)Palette 7 herum aufgestellt. Anschließend wird mit der zweiten Seitenteilegruppe B analog verfahren. Sie wird aufgestellt, und zwar auf ihre Bodenstange, und dann werden ihre Seitenteile 3 und 5 von dem Seitenteil 4 weg ausgeklappt. Auch die zweite Seitenteilegruppe B wird um die Palette 7 herum angeordnet, so daß die Palette 7 seitumfangsmäßig durch die Vorrichtung 10, d.h. durch ihre Seitenteile 1 bis 6 umgeben ist. Anschließend werden die beiden Seitenteilegruppen A und B an den Stellen, wo sie aneinander stoßen, d.h. an den Stangen 17, miteinander verbunden, um die Stabilität der Vorrichtung 10 zu verbessern. In die so montierte Vorrichtung 10 wird die wiederverwendbare Sammelverpackung 20 hineingestellt, so daß das Bodenteil 21 der Sammelverpackung 20 auf der Palette 7 aufliegt. Anschließend wird die Sammelverpackung 20 mittels ihres Klettstreifens 23 an den Klettstreifen 30 an den Oberkantstangen der Seitenteile 1 bis 6 der Vorrichtung 10 angebracht, um eine Klettverbindung zwischen der Vorrichtung 10 und der Sammelverpackung 20 zu bilden. Hierdurch wird die Sammelverpackung 20 in der Vorrichtung 10 gehalten und fixiert bzw. aufgespannt, so daß ein Aufhalten der Sammelverpackung 20 gewährleistet ist.

Leere Verpackungen können nun leicht in der in der Vorrichtung 10 eingespannten Sammelverpackung 20 gesammelt und somit aufbewahrt werden, ohne daß die Sammelverpackung 20 jedesmal extra aufgehalten werden muß. Hierdurch wird das Sammeln und Verpacken leerer Verpackungen erheblich erleichtert.

Nach dem Befüllen der Sammelverpackung 20 lassen sich die Klettstreifen 23 der Sammelverpackung 20 von den Klettstreifen 30 der Vorrichtung 10 lösen, wonach das Oberteil 25 auf die befüllte Sammelverpackung 20 aufgesetzt wird, um diese zu verschließen. Eine der beiden lösbaren Verbindungen mit der die Seitenteile 2 und 3 bzw. 5 und 6 miteinander lösbar bzw. leicht teilbar verbunden sind, wird gelöst, wonach die Seitenteile 2 und 3 bzw. 5 und 6 aufgeklappt werden und damit die Vorrichtung 10 an einer Seite geöffnet wird.

Da sich die befüllte Sammelverpackung 20 bereits auf der Palette 7 befindet, kann sie leicht mittels z.B. eines Gabelstaplers seitlich der Vorrichtung 10 entnommen und zur Rückversendung abtransportiert werden.

Das Verpackungssystem, bestehend aus der Vorrichtung 10 und der Sammelverpackung 20, kann auch in jenen Fällen verwendet werden, wo die zu sammelnden Verpackungen nicht der Sammelverpackung 20 entsprechen.

## Patentansprüche

1. Vorrichtung zum Halten einer Sammelverpackung (20) geringer Steifigkeit zum Sammeln und Verpacken wiederverwendbarer Verpackungen für Filter-Tow, wobei die Vorrichtung (10) mehrere aufstellbare Seitenteile (1 bis 6), die aufgestellt außerhalb der Sammelverpackung (20) einen Raum zur Unterbringung der Sammelverpackung begrenzen und die Sammelverpackung umfangen, und eine Halteeinrichtung (30), die mit den Seitenteilen (1 bis 6) verbunden ist, zum Befestigen der Sammelverpackung (20) an den aufgestellten Seitenteilen (1 bis 6) aufweist, dadurch gekennzeichnet,
daß mindestens eines der Seitenteile derart nach außen, von der Sammelpackung (20) weg, klappbar ist, daß die Sammelverpackung (20) der Vorrichtung (10) seitlich bzw. stirnseitig entnehmbar ist, wobei die Seitenteile (1,2,6;3,4,5) auf eine Seitenteilegruppe oder mehrere voneinander getrennte Seitenteilegruppen (A, B) aufgeteilt sind, zwischen denen eine lösbare Verbindung vorgesehen ist, wobei die Seitenteile (1,2,6;3,4,5) in jeder der Seitenteilegruppen (A;B) miteinander derart gelenkig verbunden sind, daß sie aufeinander zu umgeklappt werden können, wobei nach dem Umklappen die Flächen der Seitenteile (1,2,6;3,4,5) parallel zueinander liegen, so daß die zusammengeklappte Vorrichtung nicht länger ist als das längste der Seitenteile.

2. Vorrichtung zum Halten einer Sammelverpackung (20) geringer Steifigkeit zum Sammeln und Verpacken wiederverwendbarer Verpackungen für Filter-Tow, wobei die Vorrichtung (10) mehrere aufstellbare Seitenteile (1 bis 6), die aufgestellt außerhalb der Sammelveroackung (20) einen Raum zur Unterbringung der Sammelverpackung (20) begrenzen und die Sammelverpackung (20) umfangen oder aufgestellt innerhalb der Sammelverpackung (20) derart angeordnet sind, daß sie den größtmöglichen Raum innerhalb der Sammelverpackung (20) begrenzen und von der Sammelverpackung (20) umfangen werden, und eine Halteeinrichtung (30), die mit den Seitenteilen (1 bis 6) verbunden ist, zum Befestigen der Sammelverpackung (20) an den aufgestellten Seitenteilen (1 bis 6) aufweist, wobei die Seitenteile (1,2,6;3,4,5) auf eine Seitenteilegruppe oder mehrere voneinander getrennte Seitenteilegruppen (A,B) aufgeteilt sind, zwischen denen eine lösbare Verbindung vorgesehen ist, wobei die Seitenteile (1,2,6;3,4,5) in jeder der Seitenteilegruppen (A,B) miteinander derartig gelenkig verbunden sind, daß sie aufeinander zu umgeklappt werden können, wobei nach dem Umklappen die Flächen der Seitenteile (1,2,6;3,4,5) parallel zueinander liegen, so daß die zusammengeklappte Vorrichtung nicht länger ist als das längste der Seitenteile.

3. Vorrichtung zum Halten einer Sammelverpackung geringer Steifigkeit (20) zum Sammeln und Verpacken wiederverwendbarer Verpackungen für Filter-Tow, wobei die Vorrichtung (10) mehrere aufstellbare Seitenteile (1-6), die aufgestellt außerhalb der Sammelverpackung (20) einen Raum zur Unterbringung der Sammelverpackung begrenzen und die Sammelverpackung umfangen, und eine Halteeinrichtung (30), die mit den Seitenteilen (1 bis 6) verbunden ist, zum Befestigen der Sammelverpackung (20) an den aufgestellten Seitenteilen (1 bis 6) aufweist, dadurch gekennzeichnet,
daß die Vorrichtung zwei im wesentlichen gleiche Seitenteilegruppen (A, B) aufweist, jede der Seitenteilegruppen (A, B) aus drei Seitenteilen (1, 2, 6; 3, 4, 5) aufgebaut ist, die Seitenteile (1, 2, 6; 3, 4, 5) einer Seitenteilegruppe (A, B) miteinander gelenkig derart verbunden sind, daß zwei der Seitenteile (2, 6; 3, 5) zum dritten Seitenteil (1; 4) hin umgeklappt werden können und nach dem Umklappen in einer Fläche parallel zu und angrenzend an dem verbundenen dritten Seitenteil (1; 4) liegen, und daß zwei der Seitenteile (2, 3; 5, 6) derart umgeklappt werden können, daß die Sammelverpackung (20) der Vorrichtung (10) seitlich bzw. stirnseitig entnommen werden kann.

4. Vorrichtung nach Anspruch 1 oder Anspruch 2, dadurch gekennzeichnet, daß die Seitenteile (1 bis 6) klappbar und/oder ganz oder teilweise zerlegbar ausgelegt sind.

5. Vorrichtung nach mindestens einem der Ansprüche 1 bis 4, dadurch gekennzeichnet, daß die Seitenteile (1 bis 6) nach Art einer Rahmenkonstruktion ausgelegt sind.

6. Vorrichtung nach mindestens einem der Ansprüche 1 bis 5, dadurch gekennzeichnet, daß die Seitenteile (1 bis 6) rechteckförmig sind.

7. Vorrichtung nach mindestens einem der Ansprüche 1 bis 6, dadurch gekennzeichnet, daß die Seitenteile (1 bis 6) jeweils einen rechteckigen Rahmen aufweisen.

8. Vorrichtung nach Anspruch 7, dadurch gekennzeichnet, daß mehrere der rechteckigen Rahmen entsprechend der Seitenteile (1,2,6;3,4,5) miteinander gelenkig verbunden sind.

9. Vorrichtung nach Anspruch 8, dadurch gekennzeichnet, daß die rechteckigen Rahmen entsprechender Seitenteile (1,2,6;3,4,5), die miteinander gelenkig verbunden sind, zueinander rechtwinklig angeordnet sind, wenn die Seitenteile (1 bis 6) in der Position zum Halten der Sammelverpackung (20) aufgestellt sind.

10. Vorrichtung nach mindestens einem der Ansprüche 1 bis 9, dadurch gekennzeichnet, daß die Halteeinrichtung (30) eine oder mehrere an den Seitenteilen (1 bis 6) angebrachte Befestigungseinrichtungen aufweist, die mit entsprechenden Befestigungseinrichtungen (23) an der Sammelverpackung (20) zur Befestigung der Sammelverpackung (20) an der aufgestellten Vorrichtung (10) zusammenwirken.

11. Vorrichtung nach Anspruch 10, dadurch gekennzeichnet, daß die Befestigungseinrichtungen als Klettabschnitte (23), vorzugsweise als streifenförmige Klettabschnitte (23) ausgebildet sind.

12. Vorrichtung nach mindestens einem der Ansprüche 1 bis 11, dadurch gekennzeichnet, daß die aufgestellte Vorrichtung (10) eine umlaufende Oberkante aufweist, in deren Bereich die Halteeinrichtung (30) angeordnet ist, oder die selbst die Halteeinrichtung (30) bildet.

13. Vorrichtung nach Anspruch 11 oder 12, dadurch gekennzeichnet, daß die streifenförmigen Klettabschnitte (23) im Bereich der Oberkante der Seitenteile (1 bis 6) angebracht sind.

14. Verwendung der Vorrichtung gemäß einem der Ansprüche 1 bis 13 zum Halten einer Sammelverpackung (20), wobei die Sammelverpackung, ein Bodenteil (21), ein Mittelteil (22) und ein Oberteil (25) aufweist, wobei das Bodenteil (21) mit dem Mittelteil (22) fest oder lösbar verbunden ist und das Oberteil (25) auf das Mittelteil (22) aufgesetzt werden kann, um die Sammelverpackung (20) zu verschließen, wobei ferner das Mittelteil (22) eine Befestigungseinrichtung (23) hat, mit der die Sammelverpackung (20) an der Halteeinrichtung (30) der Vorrichtung (10) befestigbar ist.

15. Verwendung nach Anspruch 14, dadurch gekennzeichnet, daß die Befestigungseinrichtung (23) einen oder mehrere Klettstreifen aufweist.

16. Verwendung nach Anspruch 15, dadurch gekennzeichnet, daß die Befestigungseinrichtung (23) einen Klettstreifen aufweist, der sich im Bereich einer Oberkante (24) des Mittelteils (22) der Sammelverpackung (20) außenseitig am Mittelteil (22) uni das gesamte Mittelteil (22) herum erstreckt.

17. Verpackungssystem zum Sammeln und Verpacken wiederverwendbarer Verpackungen für Filter-Tow mit einer Vorrichtung (10) nach einem der Ansprüche 1 bis 13 und einer Sammelverpackung (20), wobei die Vorrichtung (10) die Sammelverpackung (20) hält.

## Claims

1. Arrangement for retaining a low-rigidity collective pack (20) for collecting and packaging reusable packs for filter tow, the arrangement (10) having a plurality of side parts (1 to 6), which can be stacked in the upright position and, in the upright position, delimit a space outside the collective pack (20) for the purpose of accommodating the collective pack and enclose the collective pack, and also having a retaining means (30), which is connected to the side parts (1 to 6), for fastening the collective pack (20) on the upright side parts (1 to 6); characterized in that at least one of the side parts can be swung outwards away from the collective pack (20) such that the collective pack (20) can be removed from the side or ends of the arrangement (10), the side parts (1, 2, 6; 3, 4, 5) being divided up into one side-part group or a plurality of separate side-part groups (A, B) with a releasable connection between them, the side parts (1, 2, 6; 3, 4, 5) in each of the side-part groups (A; B) being connected to one another in an articulated manner such that they can be swung round towards one another, and the surfaces of the side parts (1, 2, 6; 3, 4, 5) being located parallel to one another once said side parts have been swung round, with the result that the collapsed arrangement is no longer than the longest of the side parts.

2. Arrangement for retaining a low-rigidity collective pack (20) for collecting and packaging reusable packs for filter tow, the arrangement (10) having a plurality of side parts (1 to 6), which can be stacked in the upright position and, in the upright position, delimit a space outside the collective pack (20) for the purpose of accommodating the collective pack (20) and enclose the collective pack (20) or, in the upright position, are arranged inside the collective pack (20) such that they delimit the largest possible space inside the collective pack (20) and are enclosed by the collective pack (20), and also having a retaining device (30), which is connected to the side parts (1 to 6), for fastening the collective pack (20) on the upright side parts (1 to 6), the side parts (1, 2, 6; 3, 4, 5) being divided up into one side-part group or a plurality of separate side-part groups (A, B) with a releasable connection between them, the side parts (1, 2, 6; 3, 4, 5) in each of the side-part groups (A, B) being connected to one another in an articulated manner such that they can be swung round towards one another, and the surfaces of the side parts (1, 2, 6; 3, 4, 5) being located parallel to one another once the side parts have been swung round, with the result that the collapsed arrangement is no longer than the longest of the side parts.

3. Arrangement for retaining a low-rigidity collective pack (20) for collecting and packaging reusable packs for filter tow, the arrangement (10) having a plurality of side parts (1-6) which can be stacked in the upright position and, in the upright position, delimit a space outside the collective pack (20) for the purpose of accommodating the collective pack, and enclose the collective pack; and also having a retaining device (30), which is connected to the side parts (1 to 6), for fastening the collective pack (20) on the upright side parts (1 to 6); characterized in that the arrangement has two essentially identical side-part groups (A, B), each of the side-part groups (A, B) is made up of three side parts (1, 2, 6; 3, 4, 5), and the side parts (1, 2, 6; 3, 4, 5) of a side-part group (A, B) are connected to one another in an articulated manner such that two of the side parts (2, 6; 3, 5) can be swung round towards the third side part (1; 4) and are located in a surface parallel, and adjacent, to the connected, third side part (1; 4) once they have been swung round; and in that two of the side parts (2, 3; 5, 6) can be swung round such that the collective pack (20) can be removed from the side or ends of the arrangement (10).

4. Arrangement according to claim 1 or claim 2, characterized in that the side parts (1 to 6) are designed for swing action and/or such that they can be dismantled wholly or in part.

5. Arrangement according to at least one of claims 1 to 4, characterized in that the side parts (1 to 6) are designed in the manner of a frame structure.

6. Arrangement according to at least one of claims 1 to 5, characterized in that the side parts (1 to 6) are rectangular.

7. Arrangement according to at least one of claims 1 to 6, characterized in that the side parts (1 to 6) each have a rectangular frame.

8. Arrangement according to claim 7, characterized in that a plurality of the rectangular frames are connected to one another in an articulated manner corresponding to the side parts (1, 2, 6; 3, 4, 5).

9. Arrangement according to claim 8, characterized in that the rectangular frames of corresponding side parts (1, 2, 6; 3, 4, 5), which are connected to one another in an articulated manner, are arranged at right angles with respect to one another when the side parts (1 to 6) have been set in the upright position for retaining the collective pack (20).

10. Arrangement according to at least one of claims 1 to 9, characterized in that the retaining device (30) has one or more fastening devices which are fitted on the side parts (1 to 6) and interact with corresponding fastening devices (23) on the collective pack (20) for fastening the collective pack (20) on the erected arrangement (10).

11. Arrangement according to claim 10, characterized in that the fastening devices are designed as touch-and-close sections (23), preferably as strip-like touch-and-close sections (23).

12. Arrangement according to at least one of claims 1 to 11, characterized in that the erected arrangement (10) has a peripheral top edge, in the region of which the retaining device (30) is arranged or which itself forms the retaining device (30).

13. Arrangement according to claim 11 or 12, characterized in that the strip-like touch-and-close sections (23) are fitted in the region of the top edge of the side parts (1 to 6).

14. Use of the arrangement according to one of claims 1 to 13 for retaining a collective pack (20), the collective pack having a base part (21), a central part (22) and a top part (25), the base part (21) being connected fixedly or releasably to the central part (22), and it being possible for the top part (25) to be positioned on the central part (22) in order to close the collective pack (20), and, in addition, the central part (22) having a fastening device (23) by means of which the collective pack (20) can be fastened on the retaining device (30) of the arrangement (10).

15. Use according to claim 14, characterized in that the fastening device (23) has one or more touch-and-close strips.

16. Use according to claim 15, characterized in that the fastening device (23) has a touch-and-close strip which extends, in the region of the top edge (24) of the central part (22) of the collective pack (20), all the way around the outside of the central part (22).

17. Packaging system for collecting and packaging reusable packs for filter tow using an arrangement (10) according to one of claims 1 to 13 and a collective pack (20), the arrangement (10) retaining the collective pack (20).

## Revendications

1. Dispositif de maintien d'un emballage collecteur (20) de faible rigidité pour collecter et emballer des emballages réutilisables pour étoupe de filtration, où le dispositif (10) comprend :
- plusieurs parties latérales (1 à 6) pouvant être assemblées qui, assemblées à l'extérieur de l'emballage collecteur (20), délimitent un espace pour loger l'emballage collecteur et entourent l'emballage collecteur, et
- un dispositif de maintien (30) qui est relié aux parties latérales (1 à 6) pour fixer l'emballage collecteur (20) sur les parties latérales assemblées (1 à 6),
caractérisé
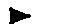 en ce qu'au moins une des parties latérales est rabattable vers l'extérieur, depuis l'emballage collecteur (20), de façon telle que l'emballage collecteur (20) peut être retiré du dispositif (10), latéralement ou frontalement, où les parties latérales (1, 2, 6 ; 3, 4, 5) sont réparties sur un groupe de parties latérales ou sur plusieurs groupes (A, B) de parties latérales, séparés l'un de l'autre, entre lesquels il est prévu une liaison amovible, où les parties latérales (1, 2, 6 ; 3, 4, 5), dans chacun des groupes (A ; B) de parties latérales, sont reliées les unes aux autres de façon articulée, de manière telle qu'elles peuvent être rabattues l'une sur l'autre où, une fois rabattues, les faces des parties latérales (1, 2, 6 ; 3, 4, 5) sont parallèles entre elles, de sorte que le dispositif rabattu n'est pas plus long que la plus longue des parties latérales.

2. Dispositif de maintien d'un emballage collecteur (20) de faible rigidité pour collecter et emballer des emballages réutilisables pour étoupe de filtration, où le dispositif (10) comprend :
- plusieurs parties latérales (1 à 6) pouvant être assemblées qui, assemblées à l'extérieur de l'emballage collecteur (20), délimitent un espace pour loger l'emballage collecteur (20) et entourent l'emballage collecteur (20) ou qui, assemblées à l'intérieur de l'emballage collecteur (20), sont disposées de façon telle qu'elles délimitent l'espace le plus grand possible à l'intérieur de l'emballage collecteur (20) et qu'elles sont entourées par l'emballage collecteur (20), et
- un dispositif de maintien (30) qui est relié aux parties latérales (1 à 6) pour fixer l'emballage collecteur (20) sur les parties latérales assemblées (1 à 6),
où les parties latérales (1, 2, 6 ; 3, 4, 5) sont réparties sur un groupe de parties latérales ou sur plusieurs groupes (A, B) de parties latérales, séparés l'un de l'autre, entre lesquels il est prévu une liaison amovible, où les parties latérales (1, 2, 6 ; 3, 4, 5), dans chacun des groupes (A, B) de parties latérales, sont reliées les unes aux autres de façon articulée, de manière telle qu'elles peuvent être rabattues l'une sur l'autre où, une fois rabattues, les faces des parties latérales (1, 2, 6 ; 3, 4, 5) sont parallèles entre elles, de sorte que le dispositif rabattu n'est pas plus long que la plus longue des parties latérales.

3. Dispositif de maintien d'un emballage collecteur (20) de faible rigidité pour collecter et emballer des emballages réutilisables pour étoupe de filtration, où le dispositif (10) comprend :
- plusieurs parties latérales (1 à 6) pouvant être assemblées qui, assemblées à l'extérieur de l'emballage collecteur (20), délimitent un espace pour loger l'emballage collecteur et entourent l'emballage collecteur, et
- un dispositif de maintien (30) qui est relié aux parties latérales (1 à 6) pour fixer l'emballage collecteur (20) sur les parties latérales assemblées (1 à 6),
caractérisé
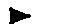 en ce que le dispositif comprend deux groupes (A, B) de parties latérales sensiblement identiques, chacun des groupes (A, B) de parties latérales étant constitué de trois parties latérales (1, 2, 6 ; 3, 4, 5),
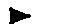 en ce que les parties latérales (1, 2, 6 ; 3, 4, 5) d'un groupe (A, B) de parties latérales sont reliées entre elles de façon articulée, de manière telle que deux des parties latérales (2, 6 ; 3, 5) peuvent être rabattues par rapport à la troisième partie latérale (1 ; 4) et, après avoir été rabattues, lesdites parties latérales se trouvent dans une surface parallèle et contiguë à la troisième partie latérale assemblée (1 ; 4), et
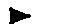 en ce que deux des parties latérales (2, 3 ; 5, 6) peuvent être rabattues de façon telle que l'emballage collecteur (20) peut être retiré du dispositif (10), latéralement ou frontalement.

4. Dispositif selon la revendication 1 ou 2, caractérisé en ce que les parties latérales (1 à 6) sont conçues comme étant rabattables et/ou totalement ou partiellement démontables.

5. Dispositif selon au moins l'une quelconque des revendications 1 à 4, caractérisé en ce que les parties latérales (1 à 6) sont conçues à la façon d'une construction en forme de cadre.

6. Dispositif selon au moins l'une quelconque des revendications 1 à 5, caractérisé en ce que les parties latérales (1 à 6) sont de forme rectangulaire.

7. Dispositif selon au moins l'une quelconque des revendications 1 à 6, caractérisé en ce que les parties latérales (1 à 6) présentent chacune un cadre rectangulaire.

8. Dispositif selon la revendication 7, caractérisé en ce que plusieurs des cadres rectangulaires sont reliés entre eux de façon articulée en correspondant aux parties latérales (1, 2, 6 ; 3, 4, 5).

9. Dispositif selon la revendication 8, caractérisé en ce que les cadres rectangulaires des parties latérales correspondantes (1, 2, 6 ; 3, 4, 5), qui sont reliés entre eux de façon articulée, sont disposés à angle droit l'un par rapport à l'autre lorsque les parties latérales (1 à 6) sont assemblées dans la position de maintien de l'emballage collecteur (20).

10. Dispositif selon au moins l'une quelconque des revendications 1 à 9, caractérisé en ce que le dispositif de maintien (30) comprend un ou plusieurs dispositifs de fixation placés sur les parties latérales (1 à 6), lesquels dispositifs agissent en coopération avec des dispositifs de fixation correspondants (23), sur l'emballage collecteur (20), pour fixer l'emballage collecteur (20) sur le dispositif (10) assemblé.

11. Dispositif selon la revendication 10, caractérisé en ce que les dispositifs de fixation sont configurés comme des segments auto-agrippants (23), de préférence comme des segments auto-agrippants (23) en forme de bande.

12. Dispositif selon au moins l'une quelconque des revendications 1 à 11, caractérisé en ce que le dispositif (10) assemblé comprend un bord supérieur circulaire dans la zone duquel est disposé le dispositif de maintien (30), ou qui constitue lui-même le dispositif de maintien (30).

13. Dispositif selon la revendication 11 ou 12, caractérisé en ce que les segments auto-agrippants (23) en forme de bande sont placés dans la zone du bord supérieur des parties latérales (1 à 6).

14. Utilisation du dispositif selon l'une quelconque des revendications 1 à 13 pour le maintien d'un emballage collecteur (20), où l'emballage collecteur comprend un fond (21), une partie centrale (22) et un dessus (25), où le fond (21) est relié de façon fixe ou amovible à la partie centrale (22) et où le dessus (25) peut être placé sur la partie centrale (22) pour fermer l'emballage collecteur (20), où, en outre, la partie centrale (22) comprend un dispositif de fixation (23) au moyen duquel l'emballage collecteur (20) peut être fixé sur le dispositif de maintien (30) du dispositif (10).

15. Utilisation selon la revendication 14, caractérisée en ce que le dispositif de fixation (23) comprend une ou plusieurs bandes auto-agrippantes.

16. Utilisation selon la revendication 15, caractérisée en ce que le dispositif de fixation (23) comprend une bande auto-agrippante qui s'étend dans la zone d'un bord supérieur (24) de la partie centrale (22) de l'emballage collecteur (20), à l'extérieur de la partie centrale (22), tout autour de la partie centrale (22).

17. Système d'emballage pour collecter et emballer des emballages réutilisables pour étoupe de filtration comprenant un dispositif (10) selon l'une quelconque des revendications 1 à 13 et comprenant un emballage collecteur (20) où le dispositif (10) maintient l'emballage collecteur (20).
